Europäisches Patentamt

(19) European Patent Office

Office européen des brevets

(11) Publication number : **0 351 383 B1**

# EUROPEAN PATENT SPECIFICATION

(12)

(45) Date of publication of patent specification : **16.12.92 Bulletin 92/51**

(51) Int. Cl.⁵ : **B60P 7/02, B60J 7/14**

(21) Application number : **89830319.3**

(22) Date of filing : **10.07.89**

(54) A cover for the bodies of trucks and similar commercial vehicles.

(30) Priority : **11.07.88 IT 4011388**

(43) Date of publication of application : **17.01.90 Bulletin 90/03**

(45) Publication of the grant of the patent : **16.12.92 Bulletin 92/51**

(84) Designated Contracting States : **DE ES FR GB**

(56) References cited :
**US-A- 3 833 255**
**US-A- 3 861 737**
**US-A- 4 585 266**

(73) Proprietor : **NUOVA TECNOCAR S.n.c. di TORRICELLI & C.**
**Via degli Inventori, 3**
**I-41018 S. Cesario sul Panaro Modena (IT)**

(72) Inventor : **Todaro, Massimo**
**Viale Muratori, 25**
**I-41100 Modena (IT)**

(74) Representative : **Lanzoni, Luciano**
**BUGNION S.p.A. Via Emilia Est, 25**
**I-41100 Modena (IT)**

EP 0 351 383 B1

Jouve, 18, rue Saint-Denis, 75001 PARIS

## Description

The invention relates to a cover for the bodies of trucks and other commercial vehicles. Such a cover is intended specifically, though by no means exclusively, for the bodies of road vehicles assigned to the bulk transportation of pollutant matter, in particular the by-products and waste from livestock slaughter.

Materials of the type in question are loaded loose into the body of the truck from above, using either crane type hydraulic loaders with which the trucks themselves are often provided, or on-site handling equipment such as lift trucks, buckets or scoops, or from silo hoppers, etc.. With loading effected in this manner, the truck must be provided with a body that affords a completely open top, at very least while the operation is in progress, whereas offloading generally involves tipping back the body and dumping the contents to the rear. Once loaded, at all events, the body must be fully covered over, though at the same time, coverings must be easily removable in view of the need to effect successive loading operations.

US-A-4585266 (corresponding to the preamble of claim 1) shows a cover for commercial vehicles whereby it consists of a first section 246 and a second section 248 articulated one with the other and forming an assembly 202 permanently associated with the truck body by way of a folding system comprising:
  - a rod 286, hinged by one end to the truck body 204 at a point on one side below the top edge 302, and fixed by its remaining end to the front of the first section 246 at a point on the edge opposite the articulated rearward edge;
  - at least one actuator 292, by which the first and second sections 246, 248 are caused to rotate in relation to one other about their common axis of articulation 276;
whereby the rod is proportioned and positioned in such a way as to enable moment of the entire cover assembly 202 between a closed limit position, in which the sections 246, 248 are unfolded and rest completely on the top edges 302 of the body 204, and a fully open folded position in which the entire cover 202 lies outside the boundary of described by the top edges of the body, and the space above the opening thus exposed is left totally obstructed.

Accordingly, the object of the present invention is to provide a simple and effective remedy to the problems outlined above.

The stated object is achieved by the features of claim 1, i.e. by adoption of a cover, which is intended for truck bodies, in particular, and where by it consists in a first section and a second section articulated one with the other and forming an assembly permanently associated with the truck body by way of a folding system comprising:
a rod, hinged by one end to the truck body at a point on one side below the top edge, and by its remaining end, to the rear of the first section at a point on the edge opposite from the articulated forward edge;
a lever, hinged by a first end to the truck body at a point adjacent to the top edge, and pivotably connected at an intermediate distance along its own length to the first section, at a point near to the articulated forward edge;
a link, hinged by one end to the remaining end of the lever, and by its other end, to the second section at a point set apart through a prescribed distance from the axis of articulation between the first and second sections;
at least one actuator, through and by which the first and second sections are interconnected and caused to rotate in relation to one another about their common axis of articulation.

According to the invention, the rod, lever and link will be proportioned and positioned in such a way as to enable movement of the entire cover assembly between a closed limit position, in which the sections are unfolded and rest completely on the top edges of the body, and a fully open folded position in which the entire cover lies outside the boundary described by the top edges of the body and the space above the opening thus exposed is left totally obstructed.

The invention will now be described in detail, by way of example, with the aid of the accompanying drawings, in which:
  fig 1 is a schematic illustration of the invention viewed in side elevation;
  fig 2 a is detail of the cover shown in fig 1 which illustrates an intermediate position assumed during operation;
  fig 3 is a detail of the cover of fig 1 showing the cover folded back completely and leaving the body of the truck fully open.

With reference to the drawings, 1 denotes the body, in its entirety, of a truck for bulk transportation of abattoir by-products and waste. The truck body 1 consists substantially in a metal bin, provided with a vertical rear panel, or tailgate, that can be opened for dumping purposes.

2 denotes a cover, in its entirety, fashioned in such a way as to sit on the top edges 3 of the body and thus ensure a tight fit; to this same end, the edges 3 might be fitted with a suitable seal in flexible material.

In the example illustrated, the cover 2 is embodied in three rigid sections articulated one with the next: 4 denotes the first section, 5 the second and 6 the third.

Alternatively embodied (mainly where the dimensions of the truck body 1 so dictate), the cover 2 might comprise a different number of mutually articulated sections, for example a first section 4 and second section 5 only.

The second section 5 articulates with the first section 4 by way of a hinge denoted 7, whilst the third section 6 articulates with the second 5 by way of a further hinge 8, the axis of which is disposed parallel to that of the first hinge 7.

The entire cover assembly 2 is permanently attached to the body 1 of the truck by way of a system of rods and levers comprising (on each side) a rod 9, a lever 10, and a link 11. A first end of the rod 9 is bent, and hinged about a pivot 12 to the side wall of the body at a point below the top edge 3, whereas the remaining end is hinged to the rear edge of the first section 4, that is, the edge toward the rear of the body opposite from the edge with which the relative hinge 7 is associated.

A first end of the lever 10 is also hinged to the side of the body by way of a pivot 13, though near to the top edge 3 and at a point distanced farther forward along the body than the pivot denoted 12. The lever 10 also articulates, at an intermediate point along its length, with the first section 4; the relative pivot is denoted 14, and located near to the forward edge of the section 4 with which the relative hinge 7 is associated. The remaining end of the lever 10, on the other hand, is hinged about a corresponding pivot 15 to the second end of the link 11, the first end of which is hinged by way of a further pivot 16 to the second section 5 at a prescribed distance from its rear edge, and more exactly, from the axis of the relative hinge 7.

The cover further comprises at least one actuator, shown in the drawings as a hydraulic cylinder 17, installed in such a way as to produce rotation of the first section 4 and the second section 5 in either direction, the one in relation to the other; accordingly, the rear end of the cylinder 17 is hinged to a mounting 18 fastened to the top side of the first section 4, and the rod end to a similar mounting 19 fastened to the top side of the second section 5.

20 denotes a second hydraulic actuator installed and operating substantially in the same manner as the first cylinder 17, in this instance between the second section 5 and the third section 6 of the cover 2; thus, these two sections are rotatable likewise in either direction, one in relation to the other. The rear end of the cylinder 20 hinges with a mounting fastened to the top of the second section 5, and the rod end with a similar mounting fastened to the top of the third section 5. Accordingly, in operating the second cylinder 20, rotation of the third section 6 relative to the second section 5 is entirely independent of the rotation of the second section 5 relative to the first section 4.

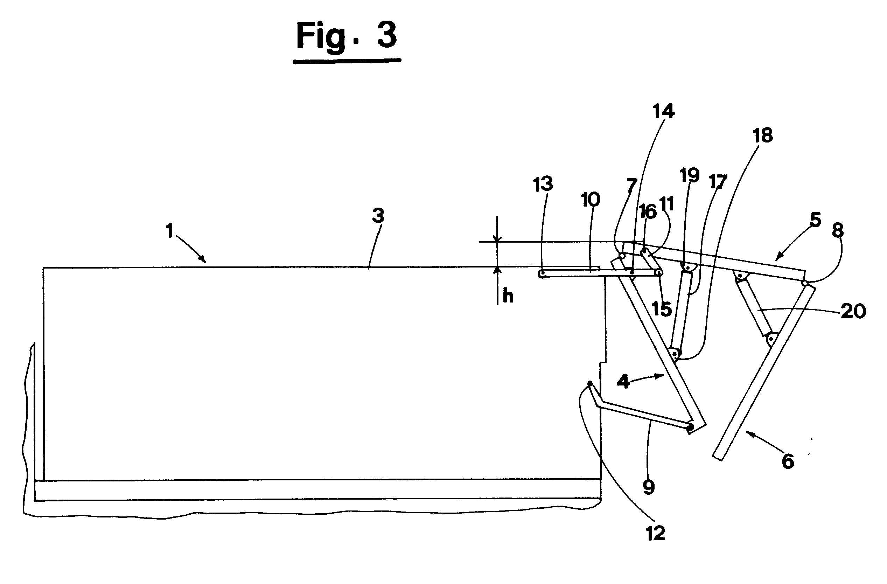

The mechanism thus connecting the first and second sections 4 and 5 to each other and to the truck body 1 affords freedom of movement between a closed position, in which the sections 4 and 5 lie flat in alignment on the top edges 3 of the body 1, and a fully open, folded position in which the selfsame sections 4 and 5 are rotated in relation to each other and to the truck, and stationed as in fig 3 outside the boundary defined by the top edges of the open body 1. Thus, not only is the open top of the bin left completely unobstructed, given that the sections fold away into space not occupied by the body 1, but in addition, the folded cover 2 projects only a short distance "h" (fig 3) above the plane occupied by the top edges of the body 1, so that loading is facilitated even further.

The opening and closing movement of the cover 2 is brought about by operating the first cylinder 17, or an identical pair of cylinders 17 positioned in parallel, to work the first and second sections 4 and 5, and operating the second cylinder 20 to produce movement (independently) of the third section 6 in relation to the second section 5.

In embodiments without the third section 6, hence without a second hydraulic cylinder 20, the opening and closing movement is produced entirely by the cylinder 17, or pair of cylinders 17, installed between the first and second sections 4 and 5.

With the entire cover folded back into the position illustrated in fig 3 and projecting just a short distance "h" above the plane occupied by the top edges of the bin, several advantages are gained when loading:

a) no obstruction when reversing the vehicle into position beneath silo hoppers;

b) no obstruction in the way of boom arms, buckets, scoops etc.;

c) no obstruction to loading operations effected with fork lift trucks, which will normally operate alongside the bin.

Whilst the vehicle will generally offload with the cover 2 in its closed position, the facility also exists, according to the invention, of tilting the truck body and opening the tailgate with the cover folded back; such a facility is advantageous most especially when dumping bones, given the possible need to remove or shift obstructions impeding the offload operation, or in cases where the inside of the bin has to be hosed down in order to clear away residual waste.

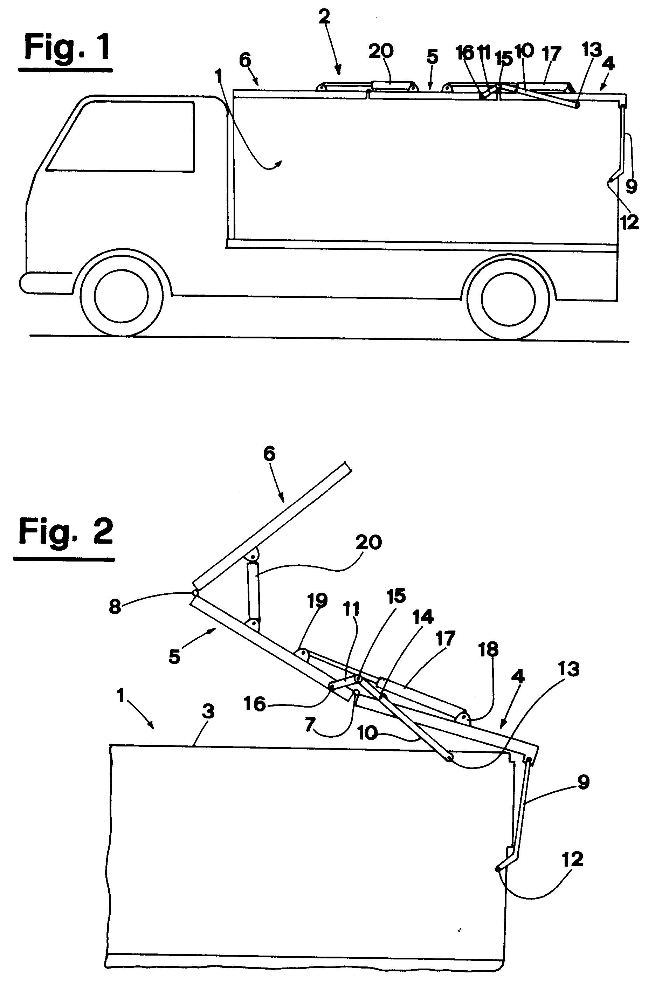

In the closed position of fig 1, a tight seal is ensured between the cover 2 and the bin.

The invention provides the advantage of being uncomplicated in embodiment, whilst enabling a freedom of movement (clearly discernible from the drawings) between the fully open and fully closed positions that derives essentially from the simple rotation of the rod 9 and the lever 10 about their relative pivots 12 and 13.

A special feature of the cover, deriving from the studied arrangement of the centres of articulation and the actuators, is that it lends itself readily to installation on trucks already in use without any need for modification to the longitudinal or transverse dimensions of the existing body or bin, and without upsetting the distribution of weight; in short, a truck already in service can be fitted with the cover and continue circulating on the public highway without contravening any regulations concerning the body specifications of commercial vehicles, hence without additional verification and updating procedures.

Similarly, by virtue of the reasons already stated, when building new vehicle bodies with a covering according to the invention, the cover structure itself constitutes no obstacle to designers seeking to gain the maximum horizontal area permissible for the class of body (maximum length x maximum width).

## Claims

1. A cover for the bodies (1) of trucks and similar commercial vehicles of the type comprising a first section (4) and a second section (5) articulated one with the other and forming an assembly (2) permanently associated with the truck body by way of a folding system comprising
at least one actuator (17), through and by which the first and second sections (4,5) are connected and caused to rotate in relation to one another about their common axis of articulation;
- a rod (9), hinged by one end to the truck body (1) at a point on one side below the top edge (3), whereby the rod (9) is proportioned and positioned in such a way as to enable movement of the entire cover assembly (2) between a closed limit position, in which the sections (4, 5) are unfolded and rest completely on the top edges (3) of the body (1), and a fully open folded position in which the entire cover (2) lies outside the boundary described by the top edges of the body, and the space above the opening thus exposed is left totally obstructed, characterized in that the rod (9) is hinged by its remaining end, to the rear of the first section (4) at a point on the edge opposite from the articulated forward edge;
- a lever (10), is hinged by a first end to the truck body (1) at a point adjacent to the top edge (3), and pivotally connected at an intermediate distance along its own length to the first section (4), at a point near to the articulated forward edge;
- a link (11), is hinged by one end to the remaining end of the lever (10), and by its other end, to the second section (5) at a point set apart through a prescribed distance from the axis of articulation (7) between the first and second sections (4, 5); whereby the lever (10) and the link (11) are proportioned and positioned in the same way as the rod (9).

2. A cover as in claim 1, wherein the actuator (17) consists in at least one hydraulic cylinder, of which the rear end is hinged to a mounting made fast to the top side of the first section (4), and the rod end hinged to a similar mounting made fast to the top side of the second section (5).

3. A cover as in claim 2, further comprising:
- a third section (6) articulated with the second section (5) by association with the edge opposite from that articulating with the first section (4);
- at least one hydraulic cylinder (20) hinged by its rear end to the second section (5) and by its rod end to the third section (6), serving to bring about rotation of the third section in relation to the second section.

## Patentansprüche

1. Eine Abdeckung für die Karosserien (1) von Lastwagen und ähnlichen kommerziellen Fahrzeugen dieser Art, bestehend aus: dem ersten Teil (4) und dem zweiten Teil (5), die miteinander durch ein Gelenk verbunden sind und eine Einheit (2) bilden, die durch ein Faltsystem dauerhaft an der Lastwagenkarosserie angebracht ist. Dieses Faltsystem besteht aus:
- mindestens einem Auslöser (17), mit dem und durch den die beiden Teile (4 und 5) verbunden sind und somit die gleichzeitige Bewegung dieser beiden Teile durch die gemeinsame Gelenkachse ermöglicht;
- einer Stange (9), deren eines Ende an einem bestimmten Punkt unterhalb der Oberkannte (3) auf einer Seite der Lastwagenkarosserie (1) eingehängt ist. Diese Stange (9) ist in solcher Weise proportioniert und befestigt, daß sie die Bewegung der gesammten Abdeckungseinheit (2) ermöglicht, und zwar ausgehend von der geschloßenen Endposition, in welcher die beiden Teile (4 und 5) ungefaltet und auf der Oberkante (3) der Lastwagenkarosserie (1) komplett ausgebreitet sind, bis zur vollständig aufgefalteten Position, in welcher die gesamte Abdeckungseinheit (2) außerhalb der, von den Oberkanten der Karosserie beschriebenen Grenzen leigt; der Raum über der Öffnung ist somit vollständig versperrt, dadurch gekennzeichnet, daß die Stange (9) an ihrem anderen Ende mit der Hinterkante des ersten Teiles (4) an einem bestimmen Punkt der Kante, der dem Gelenk bzw. der Vorderkante gegenüberliegt, verbunden ist;
- einem Hebel (10), der an einem Ende an der Lastwagenkarosserie (1), an einem bestimmten Punkt an der Grenze der Oberkante (3) eingehängt und bei einem Zwischenpunkt (in Bezug auf seine Gesamtlänge), mit dem ersten Teil (4) an einem bestimmeten Punkt nahe am Gelenk an der Vorderkante drehbar verbunden ist;
- einem Zwischenstück (11), das an einem Ende mit dem verbleiden Ende des Hebels (10) verbunden ist. Das andere Ende ist am zweiten Teil (5) befestigt und zwar an einem bestimmten Punkt, der durch den vorgeschriebenen Abstand von der Gelenkachse (7), die sich zwischen den beiden Teilen (4 und 5) befindet, festgelegt ist. Der Hebl (10) und das Zwischenstück (11) sind in gleicher Weise wie die Stange (9) proportioniert und befestigt.

2. Abdeckung gemäß Anspruch 1), dadurch gekennzeichnet, daß der Auslöser (17) aus mindestens einem hydraulischen Zylinder besteht, und dessen hinteres Ende in eine, auf der Oberseite des Teiles (4) angebrachte Aufhängevorrichtung, eingehängt ist; sein vorderes Ende ist in eine ähnliche, auf der Oberseite des Teiles (5) angebrachte Aufhängevorrichtung eingehängt.

3. Abdeckung gemäß Anspruch 2), dadurch gekennzeichnet, daß sie außerdem noch folgendes beinhalten:
   - einen dritten Teil (6), der durch ein Gelenk mit dem zweiten Teil (5) an der Kante, die der Verbindungskante mit dem ersten Teil (4) gegenüberliegt, verbunden ist;
   - einen hydraulischen Zylinder (20), dessen hinteres Ende am zweiten Teil (5) und sein vorderes Ende am dritten Teil (6) befestigt ist und dazu dient, den dritten Teil im entsprechenden Verhältnis zum zweiten Teil zu bewegen.

**Revendications**

1. Une couverture pour les corps (1) de camions du type comprenant
   - une première section (4) et une deuxième section (5) articulées l'une avec l'autre et formant un assemblage (2) associé en permanence avec le corps du camion au moyen d'un système pliant comprenant
   - au moins un engin qui met en action (17) à travers et par lequel la première et la deuxième sections (4, 5) sont reliées et poussées à tourner l'une par rapport à l'autre autour de leur axe commun d'articulation;
   - une tige (9) articulée au moyen d'une charnière à une extrémité du corps (1) du camion en un point sur un côté au-dessous du sommet du bord (3) et donc la tige (9) est proportionnée et positionnée d'une façon telle à permettre le mouvement de tout l'assemblage (2) de couverture entre une position limite de fermeture, dans laquelle les sections (4, 5) sont ouvertes et appuyées complètement sur le sommet des bords (3) du corps (1), et une position pliés d'ouverture complète dans laquelle la couverture tout entière (2) se trouve en dehors de la limite décrite par les sommets du corps, et l'espace au-dessus de l'ouverture ainsi exposée est laissé complètement obstrué caractérisé par le fait que la tige (9) est articulée au moyen d'une charnière par son extrémité restante, à la partie postérieure de la première section (4) en un point sur le bord opposé au bord articulé en tête;
   - un levier (10) est articulé au moyen d'une charnière par une première extrémité au corps (1) du camion en un point adjacent au sommet du bord (3), et relié de façon à pouvoir pivoter, à une distance intermédiaire le long de sa propre longueur à la première section (4) en un point près du bord articulé en tête;
   - un joint (11) est articulé au moyen d'une charnière par une extrémité à l'extrémité restante du levier (10) et par son autre extrémité, à la deuxième section (5) en un point placé à part à travers une distance établie à partir de l'axe de l'articulation (7) entre la première et la deuxième sections (4, 5); donc le levier (10) et le joint (11) sont proportionnés et positionnés de la même façon que la tige (9).

2. Une couverture comme celle de la revendication 1, dans laquelle l'engin qui met en action (17) comprend au moins un cylindre hydraulique, dont l'extrémité postérieure est articulée au moyen d'une charnière à un support immobilisé au côté supérieur de la première section (4) et l'extrémité de la tige articulée au moyen d'une charnière à un support immobilisé semblable au côté supérieur de la deuxième section (5).

3. Une couverture comme celle de la revendication 2, comprenant en plus:
   - une troisième section (6) articulée avec la deuxième section (5) par l'association avec le bord opposé à partir de cell-ci s'articulant avec la première section (4);
   - au moins un cylindre (20) hydraulique articulé au moyen d'une charnière par son extrémité postérieure à la deuxième section (5) et par l'extrémité de sa tige à la troisième section (6), servant à déterminer la rotation de la troisième section par rapport à la deuxième section.

# Fig. 1

# Fig. 2

# Fig. 3

EP 0 351 383 B1